# FASCICULE DE BREVET EUROPEEN

(11) **EP 2 176 187 B1**
(45) Date de publication et mention de la délivrance du brevet: **04.10.2017**
(21) Numéro de dépôt: 08841076.6
(22) Date de dépôt: 28.07.2008
(51) Int. Cl.: C04B 24/38, C04B 24/32, C04B 28/02, C04B 28/04, C04B 103/44, C04B 111/10, C04B 111/62

(54) **COMPOSITION CIMENTAIRE DE BÉTON AUTOPLAÇANT ET BÉTON AUTOPLAÇANT RENFERMANT UNE TELLE COMPOSITION**
ZEMENTZUSAMMENSETZUNG VON SELBSTAUSRICHTENDEM BETON UND SELBSTAUSRICHTENDER BETON MIT EINER SOLCHER ZUSAMMENSETZUNG
CEMENTITIOUS COMPOSITION OF SELF-LEVELLING CONCRETE AND SELF-LEVELLING CONCRETE CONTAINING SUCH COMPOSITION

(30) Priorité: 30.07.2007 FR 0705568
(43) Date de publication de la demande: 21.04.2010
(73) Titulaire: CIMENTS FRANCAIS, F-92800 Puteaux (FR)
(72) Inventeur: FABBRIS, Faber, F-75012 Paris (FR)
(74) Mandataire: Laget, Jean-Loup
(86) Numéro de dépôt international: PCT/FR2008/001127
(87) Numéro de publication internationale: WO 2009/053541

(56) Documents cités:
- EP-A- 1 197 480
- WO-A-00/05181
- US-A1- 2005 241 539
- LACHEMI M ET AL: "Performance of new viscosity modifying admixtures in enhancing the rheological properties of cement paste" CEM CONCR RES; CEMENT AND CONCRETE RESEARCH FEBRUARY 2004, vol. 34, no. 2, février 2004 (2004-02), pages 185-193, XP002473614

## Description

La présente invention concerne une composition cimentaire de béton autoplaçant renfermant un mélange d'adjuvants modificateurs de rhéologie et le béton autoplaçant renfermant une telle composition.

Les bétons autoplaçants sont des bétons très fluides, homogènes et stables qui sont mis en oeuvre sans vibrations, la compaction s'effectuant par le seul effet gravitaire. Les bétons autonivelants constituent une famille particulière de bétons autoplaçants correspondant aux applications horizontales telles que des chapes, des dallages ou des planchers.

Ces bétons renferment des granulats (de dimension pouvant aller jusqu'à 20 mm environ) enrobés dans une composition cimentaire comprenant un liant hydraulique, par exemple du ciment Portland, et au moins un adjuvant qui est, de préférence, un fluidifiant ou superplastifiant qui confère au mélange une fluidité accrue proche de celle d'un liquide. Ceci explique le caractère autonivelant ou autoplaçant dudit béton.

Ces bétons ont une capacité de moulage, d'enrobage et de compaction intéressante. Ils sont très appréciés dans les domaines de la construction et du bâtiment de par leur aspect et leur aptitude à "rattraper" des niveaux inégaux, à se placer dans le ferraillage et à enrober, par exemple, des canalisations de chauffage par le sol, sans application de vibrations externes généralement en usage dans les techniques de constructions traditionnelles. Ces compositions sont en outre généralement appréciées pour leur facilité de mise en oeuvre car il est possible de pomper le béton frais à des hauteurs de plusieurs centaines de mètres, ce qui évite la manutention des différents constituants à proximité immédiate de l'application et élimine les opérations de vibration en optimisant ainsi les coûts et l'organisation du chantier.

Cependant, cette propriété de fluidité du béton autoplaçant doit être obtenue sans provoquer de problèmes de ressuage ni de sédimentation des granulats.

La stabilité de ces bétons est habituellement obtenue en introduisant dans leurs formulations des composants minéraux solides appelés fillers, tels que mentionnés dans la norme NF EN 206-1. Ces fillers sont des produits inertes siliceux ou calcaires sous forme de particules de faible granulométrie, de préférence de taille inférieure ou égale à la granulométrie du ciment, c'est-à-dire comprise généralement entre 0,10 µm et 100 µm. En comblant les vides entre les particules de ciment, les fillers améliorent la compacité du béton. Ils sont particulièrement utilisés dans les bétons autoplaçants à faible résistance mécanique, c'est-à-dire par exemple de classe 25 à 30 MPa à 28 jours. Leur proportion dans un béton peut atteindre 5 à 10 % en poids de la masse totale du béton.
L'introduction de filler dans les formulations de bétons autoplaçants est particulièrement nécessaire dans le cas des bétons appartenant aux classes de résistances à la compression plus faibles. En effet, dans les bétons autoplaçants, le rapport eau/ciment étant élevé, la fraction volumique solide du béton est plus faible, et les risques de ségrégation et de ressuage sont plus importants.

Toujours dans le but d'en augmenter la stabilité vis-à-vis de la ségrégation et/ou du ressuage, les bétons autoplaçants renferment fréquemment, outre les additions minérales citées (fillers), et en plus des agents fluidifiants ou superplastifiants, des agents de diverses natures chimiques qui permettent de maîtriser la rhéologie de la composition, dits couramment "épaississants" ou "agents de stabilité".

Les agents "épaississants", tels que ceux décrits dans EP-A-1197480 et WO 00/05181 pour des mortiers (c'est-à-dire renfermant comme agrégat uniquement du sable), ont pour but l'amélioration de la stabilité des bétons autoplaçants vis-à-vis de la ségrégation et/ou du ressuage ; ce sont souvent des macromolécules, notamment des dérivés cellulosiques tels que les éthers de cellulose ou autres polysaccharides, ou encore des polymères de synthèse tels que le poly(oxyde d'éthylène), ou les alcools polyvinyliques. Ils ont pour avantage de modifier le comportement rhéologique (entre autre en augmentant la viscosité) de la composition cimentaire. Ce sont cependant des molécules présentant en solution aqueuse une viscosité très élevée (au-delà de 70 à 100 Pa.s en solution aqueuse à 2 % en poids).

En outre, afin d'améliorer l'ouvrabilité du béton, en particulier afin d'augmenter son étalement, il est possible d'augmenter la proportion en superplastifiant de la formule. Cette proportion supérieure en superplastifiant peut cependant provoquer des effets indésirables tels qu'une distribution non uniforme des granulats au sein du béton gâché, une ségrégation et/ou un ressuage. Le béton autoplaçant peut donc présenter des problèmes de stabilité ou de cohésion lors de sa mise en oeuvre et/ou immédiatement après sa mise en place.

Le mécanisme d'action même de ces superplastifiants (défloculation), responsable de l'augmentation de l'étalement, peut être à l'origine d'instabilité du béton à l'état frais. En particulier la réduction du seuil de cisaillement engendrée par le superplastifiant conduit à une réduction du domaine de déformation élastique réversible de la pâte cimentaire (à savoir ici l'ensemble eau, ciment, filler). Ce phénomène limite la capacité de la pâte cimentaire à retenir dans son sein des granulats soumis à la gravité (ségrégation au repos). Cet inconvénient est accentué lorsque la taille des granulats augmente : en particulier dans les bétons renfermant des granulats de taille pouvant aller jusqu'à 20 mm par rapport aux mortiers renfermant du sable de granulométrie inférieure ou égale à 6 mm.

Parallèlement à cette réduction du seuil d'écoulement, les fortes proportions en superplastifiant peuvent engendrer une baisse de la viscosité de la pâte de ciment et donc du béton. Cette diminution de la viscosité expose le béton, lorsqu'il est soumis à un écoulement (notamment lors de son pompage ou de sa mise en place), à des phénomènes d'instabilité et de ségrégation dynamique qui ne sont pas nécessairement observables au repos.

Ces deux phénomènes d'hétérogénéité et de ségrégation au repos et à l'état dynamique nuisent à la mise en oeuvre correcte du béton autoplaçant.

Pour prévenir ces problèmes, deux types de mesures ont été prévus dans l'art antérieur :
1) augmenter la fraction volumétrique solide au sein de la pâte de ciment.
   Ceci est obtenu avec des teneurs en ciment supérieures à celles préconisées pour les résistances mécaniques souhaitées ou par l'introduction d'ajouts minéraux fins avec ou sans activité hydraulique (tels que des fillers calcaires, des cendres volantes...). Cette augmentation de la fraction solide a pour effet d'augmenter la compaction du mélange en prévenant ainsi la ségrégation au repos ; la viscosité du mélange résultante est aussi accrue. Ceci permet de diminuer le risque de ségrégation et/ou d'instabilité du béton à l'état frais.
2) introduire des adjuvants spécifiques agissant directement sur la rhéologie du béton. Ce sont des adjuvants faisant partie de familles chimiques très différentes et connus sous les noms d'agents de stabilité (ou de cohésion), d'agents épaississants ou d'agents viscosants. Ces définitions sont à considérer comme purement conventionnelles, car la grande majorité de ces adjuvants a des effets bien plus complexes et différenciés sur la rhéologie du béton qu'une simple augmentation de viscosité.

L'introduction d'adjuvants spécifiques agissant sur la rhéologie du béton est, dans la pratique, toujours complémentaire de l'introduction de filler.
La proportion en filler étant généralement comprise entre 30 et 45 % en poids par rapport au ciment, ce qui correspond à une teneur pouvant atteindre 5 à 10 % en poids de l'ensemble du béton, son introduction représente un coût non négligeable (approvisionnement, transport, manutention...).
En outre, le dosage des adjuvants, dans une formule de béton autoplaçant, est souvent délicat en raison de l'effet sur les propriétés rhéologiques du béton. Il est en effet fréquent que ces adjuvants aient un effet à la fois sur le seuil de cisaillement et sur la viscosité. En fonction de leur dosage l'importance relative de la variation du seuil de cisaillement et de la viscosité est différent : de faibles concentrations de ces adjuvants peuvent avoir un effet prévalant sur le seuil de cisaillement et un effet minimal sur la viscosité ; aux doses plus élevées ces effets peuvent être inversés.

Il peut donc se produire que l'objectif d'augmenter la viscosité du béton (pour en prévenir l'instabilité lors de sa mise en place) soit obtenue au prix d'un seuil de cisaillement plus élevé et donc au prix d'une réduction de l'étalement.

Lors d'études récentes sur les différents adjuvants modificateurs de rhéologie, agissant sur le seuil de cisaillement et sur la viscosité, il a été découvert de manière surprenante que la combinaison de deux agents particuliers permettait de conférer à la composition cimentaire et donc au béton des propriétés inattendues, notamment permettant de réduire de manière considérable la teneur en filler, voire de supprimer la présence de filler dans ledit béton.

A cet effet, la présente invention concerne une composition cimentaire de béton autoplaçant comprenant un ciment, un superplastifiant, un mélange d'adjuvants modificateurs de rhéologie, ledit béton renfermant des granulats de dimension pouvant aller jusqu'à 20 mm, caractérisée en ce que ledit mélange comprend la combinaison :
- d'au moins un premier agent augmentant de façon prépondérante le seuil de cisaillement du béton à l'état fluide choisi parmi un éther de polysaccharide naturel, un éther d'hydroxyalkylguar, une hydroxyéthylcellulose ou un hydroxypropylguar, modifiés hydrophobes par introduction de greffons latéraux hydrophobes, et
- au moins un second agent viscosant augmentant de façon prépondérante la viscosité dudit béton à l'état fluide, choisi parmi une hydroxyalkylcellulose, non modifiée hydrophobe, à degré de polymérisation compris entre 500 environ et 4500 environ, présentant une viscosité inférieure à 50 Pa.s en solution aqueuse à 2 % en poids, et un poly(oxyde d'éthylène)
et une teneur en filler dans le béton inférieure à 20 % en poids par rapport au ciment.

Cette composition cimentaire limite ou empêche la ségrégation dynamique des granulats, dans le béton lors de sa mise en oeuvre, et permet de réduire la teneur en filler dans le béton à une valeur inférieure à 20 % en poids par rapport au ciment.

Ces deux agents ont chacun une action spécifique, sélective et distincte.
On entend ici par "agent augmentant le seuil de cisaillement" un agent modificateur de la rhéologie du béton fluide, agissant de façon prépondérante sur le seuil de cisaillement, sans altérer les autres paramètres rhéologiques de ce béton, notamment sa viscosité différentielle.
On entend ici par "agent viscosant" un agent dont l'effet prépondérant de son ajout au béton est l'augmentation de la viscosité différentielle du béton à l'état fluide.
On entend ici par "béton à l'état fluide" le béton obtenu immédiatement après gâchage, c'est-à-dire après ajout d'eau au liant hydraulique (ciment) et malaxage, mais avant le début de la prise dudit ciment.
Dans l'ensemble du texte, on entend par "modifié" le greffage, sur le squelette du polymère, de greffons latéraux, par exemple des groupes fonctionnels ou des chaînes latérales hydrophobes, avantageusement les greffons sont des chaînes alkyles en C₄-C₃₀ (c'est-à-dire des chaînes ramifiées ou non, comportant de 4 à 30 atomes de carbone) et par "modifié hydrophobe", la présence de tels greffons hydrophobes.

Ces agents sont très solubles dans l'eau. Or l'inventeur a constaté, de manière surprenante, que les solutions aqueuses renfermant le deuxième agent et plus particulièrement les hydroxyalkylcelluloses précitées, présentant une faible viscosité, à savoir une viscosité à 25° C inférieure à 50 Pa.s environ (de préférence inférieure à 10 Pa.s ou de préférence encore inférieure à 5 Pa.s), à une concentration de 2 % en poids dans l'eau, sont plus efficaces pour limiter ou empêcher la ségrégation dynamique des granulats, que les hydroxyalkylcelluloses non modifiées hydrophobes, à degré de polymérisation supérieur à 5000, qui présentent en solution aqueuse, à une même concentration, une viscosité supérieure à 70 ou 100 Pa.s environ.

Le second agent est avantageusement une hydroxyalkylcellulose, non modifiée hydrophobe, à degré de polymérisation compris entre 500 environ et 4.000 environ.

De préférence, le poly(oxyde d'éthylène) est de poids moléculaire compris entre 1.000.000 et 5.000.000, de préférence entre 2.500.000 et 4.000.000, et de manière encore préférée entre 3.000.000 et 3.500.000.

II est apparu que les effets combinés synergiques sur le seuil de cisaillement et la viscosité du béton à l'état fluide, sont particulièrement observés lorsque la composition renferme avantageusement jusqu'à 1 %, de préférence jusqu'à 0,1 % en poids de ciment dudit premier agent et jusqu'à 5 %, de préférence jusqu'à 2 % en poids de ciment, et de manière encore préférée jusqu'à 1 % en poids de ciment dudit second agent.

La présente invention concerne également tout béton autoplaçant renfermant une composition cimentaire telle que décrite ci-dessus, et une teneur en filler inférieure à 20 % en poids du ciment, de préférence une teneur en filler inférieure à 10 % en poids du ciment, et de manière encore préférée inférieure à 5 % en poids du ciment, voire de manière très avantageuse sans aucun ajout de filler.

Un tel mélange d'adjuvants, selon la présente invention, permet, en effet, de manière surprenante de s'affranchir de la présence de filler dans un béton, notamment un béton autoplaçant, sans réduction des performances relatives à l'étalement, à la stabilité au tamis, au ressuage ni à la ségrégation dynamique, par rapport à un béton avec filler, notamment un béton à même rapport eau/ciment, c'est-à-dire de même classe de résistance.

Cette réduction de la teneur en filler, voire cette absence d'ajout de filler présente un énorme avantage dans le domaine du béton en supprimant un constituant important en terme de volume, de poids et de manutention (transport, stockage et autres aspects logistiques), et donc conduit à une simplification considérable de la mise en oeuvre du béton, à un coût réduit.

La présente invention concerne également l'utilisation d'un mélange comprenant :
- d'au moins un premier agent augmentant de façon prépondérante le seuil de cisaillement du béton à l'état fluide choisi parmi un éther de polysaccharide naturel, un éther d'hydroxyalkylguar, une hydroxyéthylcellulose ou un hydroxypropylguar, modifiés hydrophobes par introduction de greffons latéraux hydrophobes, et
- au moins un second agent viscosant augmentant de façon prépondérante la viscosité dudit béton à l'état fluide, choisi parmi une hydroxyalkylcellulose, non modifiée hydrophobe, à degré de polymérisation compris entre 500 environ et 4500 environ présentant une viscosité inférieure à 50 Pa.s en solution aqueuse à 2 % en poids, et un poly(oxyde d'éthylène)
pour s'affranchir de la présence de particules de filler, dans un béton autoplaçant, sans réduction des performances relatives à l'étalement, au ressuage, et à la ségrégation dynamique des granulats.

La présente invention va être illustrée à l'aide des exemples non limitatifs suivants.

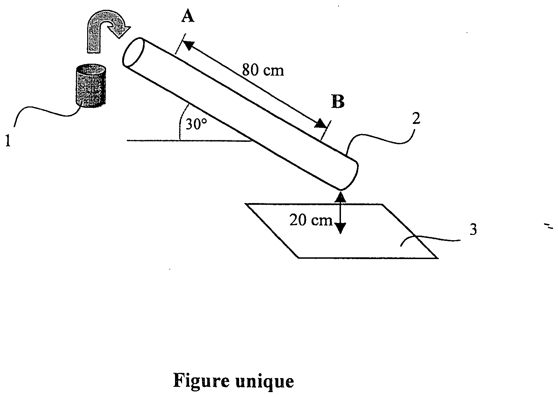

La figure unique présente un schéma de l'appareillage pour le "test à la goulotte".

### Constituants de départ

- ciments : bien que l'invention puisse s'appliquer à tout type de ciment, les ciments testés étaient des ciments Portland,
- le filler était un filler calcaire, de préférence concassé, de granulométrie comprise entre 1 et 100 µm,
- agent de cohésion : pour les exemples référencés, en complément de l'action du filler, il a pour rôle essentiel de limiter la ségrégation du béton au repos, l'agent utilisé ici est commercialisé sous le nom COLLAXIM L10 par la Société AXIM.
- granulats de préférence de type siliceux ou silico-calcaire caractérisés par deux ou plusieurs classes granulométriques et toujours par un Dₘₐₓ ≤ 20 mm,
- superplastifiant il est du type copolymère d'acide carboxylique acrylique avec des esters acryliques, par exemple tel que celui commercialisé sous le nom Cimfluid duo 1001 par la Société Axim.

Dans les exemples ci-après, le rapport eau efficace/ciment a été précisé car il est important pour la résistance mécanique finale du béton.

Le volume de pâte cimentaire (hors granulats) est identique après gâchage (ajout de l'eau) afin de mieux comparer les compositions testées, les compositions de référence (avec filler) correspondantes et les compositions renfermant un seul agent ou des agents différents de ceux de la présente invention (exemples comparatifs).

### Tests effectués

- Etalement : l'étalement a été mesuré au cône d'Abrams (selon la norme EN 12350-2)
- Test à la goulotte : il s'agit d'un test élaboré au laboratoire afin de tenter de mettre en évidence la ségrégation dynamique puis de comparer les effets des différents adjuvants. Un schéma de l'appareillage nécessaire à la réalisation de cet essai est présenté sur la figure unique. Cet essai consiste à déverser un seau 1 (2 litres) du béton à tester immédiatement après gâchage à l'eau, dans un tuyau 2 de 15 cm de diamètre et de 110 cm de longueur, incliné de 30 degrés par rapport à l'horizontale. La sortie du tuyau 2 est centrée au-dessus d'une plaque d'étalement 3 disposée à 20 cm. Ce test permet d'obtenir des informations à la fois quantitatives et qualitatives : le temps d'écoulement (c'est-à-dire l'intervalle de temps nécessaire au front de béton pour parcourir la distance entre les repères A et B, séparés de 80 cm), et l'aspect du béton pendant et après son étalement (sous forme d'une "galette") sur la plaque d'étalement 3.

(Cet aspect est évalué à partir de critères visuels, par rapport à la forme de la galette et à l'homogénéité du béton).

On considère que le béton est affecté par une ségrégation dynamique si la galette d'étalement présente une forme asymétrique ou si une séparation pâte/granulats est observée.
- Indice de stabilité au tamis : l'essai est réalisé conformément aux indications du projet de norme EN 12350-11 ;
- Ressuage : le ressuage est apprécié visuellement.
- Les agents modificateurs de rhéologie testés sont les suivants :
   1^{er} agent : agent augmentant de façon prépondérante le seuil de cisaillement du béton fluide :
- le composé NEXTON commercialisé par la Société AQUALON-HERCULES est un polysaccharide naturel modifié dont la chaîne principale est la cellulose (β-D-glucose) éthérifié au moyen d'une base forte et d'oxyde d'éthylène pour obtenir une hydroxyéthylcellulose (HEC) et introduction de chaînes alkyliques conduisant à la formation de l'hydroxyéthylcellulose modifiée hydrophobe (HMHEC), le nombre de substituants (MNS) par unité β-D-glucosidique est de l'ordre de 2,5.
- ESACOL MX 144, ce produit commercialisé par la Société LAMBERTI est un polysaccharide dont la chaîne principale est la gomme de guar (unité répétitive constituée de β-D-mannose et α-β-galactose) ayant subi une éthérification avec oxyde de propylène conduisant à la formation de l'hydroxypropylguar (HPG) ayant un nombre de substituants par unité supérieur à 2,5. Ce produit a été modifié hydrophobe par introduction de chaînes latérales.
- en tant qu'exemples comparatifs ont été testés l'ESACOL HS26 et l'ESACOL HS30 commercialisés par la Société LAMBERTI et qui sont des molécules de type hydroxypropylguar ou hydroxyalkylguar, mais non modifiées hydrophobes. Ces molécules confèrent à la composition cimentaire des modifications comparables des paramètres viscosité et seuil de cisaillement, et n'ont donc pas une action prépondérante sur le seuil de cisaillement.
   2^{ème} agent : agent augmentant de façon prépondérante la viscosité :
- un polysaccharide naturel modifié avec chaîne principale de cellulose (β-D-glucose) éthérifié au moyen d'une base forte et d'oxyde d'éthylène pour obtenir une hydroxyéthylcellulose (HEC) avec un nombre de moles de substituants (MS) par unité de β-D-glucose de 2,5 et des degrés de polymérisation variables (PD).
   Dans les exemples selon la présente invention, ont été utilisés le NATROSOL 250 GXR qui est une HEC avec un degré de polymérisation d'environ 1.000 et le NATROSOL 250 HXR qui est une HEC avec un degré de polymérisation d'environ 3.700. Ces produits, solubles dans l'eau, présentent une viscosité faible, y compris à des concentrations allant jusqu'à 2 % en poids dans l'eau :
   Natrosol 250 GXR : à
      0,5 % en poids dans l'eau = 8,5.10⁻³ Pa.s
      1 % en poids dans l'eau = 0,035 Pa.s
      2 % en poids dans l'eau = 0,26 Pa.s
   Natrosol 250 HXR : à
      1% en poids dans l'eau = 2 Pa.s
      2 % en poids dans l'eau = 30 Pa.s
- un poly(oxyde d'éthylène) tel que commercialisé sous le nom ALKOX E-130 de la Société MEISEI CHEMICAL WORKS LTD (poids moléculaire compris entre 3.000.000 et 3.500.000), soluble dans l'eau ;
- en tant qu'exemple comparatif, a été testé le NATROSOL 250 HHXR qui présente un degré de polymérisation supérieur, à savoir compris entre 4.800 et 5.000 environ. Ce composé confère à la composition cimentaire des modifications comparables des paramètres viscosité et seuil de cisaillement, et ne présente donc pas une action prépondérante sur la viscosité. En outre, le NATROSOL 250 HHXR présente en solution aqueuse une viscosité qui augmente notablement avec sa concentration, à savoir 7 Pa.s à 1 %, 50 Pa.s à 1 % et 300 Pa.s à 2 % en poids dans l'eau.

Les composés "NATROSOL" sont commercialisés par la Société AQUALON-HERCULES.

Les viscosités notées ci-dessus ont été mesurées sur un rhéomètre à contrainte imposée (AR 1000 de TA Instruments) avec un géométrie cône plan à 2° d'ouverture.

Dans les exemples présentés, les agents modificateurs de rhéologie (1^{er} agent et 2^{ème} agent) sont ajoutés, ainsi que le superplastifiant, après l'introduction de l'eau dans le mélange cimentaire. En variante, il est possible de partir d'un "prémix", c'est-à-dire une composition cimentaire renfermant ciment, superplastifiant, 1^{er} et 2^{ème} agent ; auquel seront ensuite ajoutés sur site les granulats et l'eau.

Dans l'ensemble des exemples ci-après, la teneur en ciment, eau, filler et granulat est exprimée en Kg/m³, la teneur en superplastifiant, en agent de cohésion, et en 1^{er} et 2^{ème} agent est exprimée en % en poids du ciment.

Les tests considérés comme acceptables dans la présente invention étaient :
- pour l'étalement to, une valeur supérieure ou égale à 630 mm, l'étalement souhaité pour les bétons autoplaçants étant généralement supérieur ou égal à 600 mm,
- la stabilité au tamis doit être inférieure à 30 %,
- on doit noter une absence de ressuage et une absence de ségrégation dynamique
- ainsi qu'un temps à la goulotte compris entre 2 et 10 s, de préférence entre 2 et 7 s et de manière encore préférée entre 4 et 6 s.

### Exemple 1 (comparatif) - Exemple 2 (comparatif) - Exemple 3 (référence) - Exemple 4 (invention)

Dans un premier temps des exemples comparatifs ont été mis en oeuvre avec l'un seulement des agents. L'exemple comparatif 1 utilisait uniquement l'agent augmentant le seuil de cisaillement et l'exemple comparatif 2 l'agent augmentant uniquement la viscosité.

Le tableau 1 présente les résultats de ces deux exemples 1 et 2 comparatifs avec un exemple 4 incluant une combinaison des deux agents, en référence avec une composition renfermant un filler en présence d'un agent de cohésion. Cette dernière composition, nommée "Ex. 3 (Réf.)" dans tous les tableaux, est formulée selon l'art antérieur.

On note que dans l'exemple comparatif 1 renfermant uniquement l'agent augmentant le seuil de cisaillement que le temps à la goulotte est inférieur à 1 s, ce qui traduit une viscosité insuffisante et une stabilité au tamis supérieure à 50 %. En outre, on note un ressuage et une ségrégation dynamique.

Une ségrégation dynamique est également observée à la fin de coulée du béton selon l'exemple 2 comparatif renfermant uniquement un agent augmentant la viscosité.

Des valeurs de stabilité au tamis comparables sont observées pour l'exemple 3 de référence avec filler et l'exemple 4 selon la présente invention sans filler incluant la combinaison de deux agents.

**Tableau 1**

| | Ex 1 (comp) | Ex 2 (comp) | Ex 3 (Réf.) | Ex 4 |
|---|---|---|---|---|
| Ciment CEM II 32,5 R | 376 | 376 | 300 | 376 |
| Eau efficace | 227 | 227 | 180 | 227 |
| Filler | 0 | 0 | 192 | 0 |
| Granulats | 1654 | 1654 | 1654 | 1654 |
| Superplastifiant | 1,0 % | 1,0 % | 2,0 % | 1,0 % |
| Agent de cohésion | | | 0,05 % | |
| 1^{er} agent (seuil) | | | | |
| ESACOL MX144 | 0,02 % | | | 0,025 % |
| 2^{ème} agent (viscosant) | | | | |
| NATROSOL 250 GXR | | 0,05 % | | 0,05 % |
| Eau efficace / Ciment | 0,6 | 0,6 | 0,6 | 0,6 |
| Volume de pâte | 370 L | 370 L | 370 L | 370 L |
| Etalement à t₀ | 650 mm | 695 mm | 720 mm | 680 mm |
| Temps à la goulotte | < 1 s | 6 s | 4,5 s | 6,5 s |
| Stabilité au tamis | >50 % | >50 % | 27 % | 23 % |
| Ressuage | présent | absent | absent | absent |
| Ségrégation dynamique | présente | présente à la fin de la coulée | absente | absente |

### Exemples 5. 6 et 7

Différentes concentrations en agent augmentant le seuil de cisaillement et en agent viscosant sont présentées dans le tableau 2. Des teneurs variables en ces deux agents ont été testées dans les exemples 5, 6 et 7.

**Tableau 2**

| | Ex 3 (Réf.) | Ex 5 | Ex 6 | Ex 7 |
|---|---|---|---|---|
| Ciment CEM II 32,5 R | 300 | 376 | 376 | 376 |
| Eau efficace | 180 | 227 | 227 | 227 |
| Filler | 192 | 0 | 0 | 0 |
| Granulats | 1654 | 1654 | 1656 | 1654 |
| Superplastifiant | 2,0 % | 0,6 % | 0,8 % | 1,0 % |
| Agent de cohésion | 0,05 % | | | |
| 1^{er} agent (seuil) | | | | |
| ESACOL MX144 | | 0,015 % | 0,02 % | |
| NEXTON | | | | 0,02 % |
| 2^{ème} agent (viscosant) | | | | |
| NATROSOL 250 GXR | | 0,3 % | 0,5 % | |
| NATROSOL 250 HXR | | | | 0,05 % |
| Eau efficace / Ciment | 0,6 | 0,6 | 0,6 | 0,6 |
| Volume de pâte | 370 L | 370 L | 370 L | 370 L |
| Etalement à t₀ | 720 mm | 650 mm | 665 mm | 630 mm |
| Temps à la goulotte | 4,5 s | 4 s | 5 s | 2,12 s |
| Stabilité au tamis | 27 % | 16 % | 14 % | 12 % |
| Ressuage | absent | absent | absent | absent |
| Ségrégation dynamique | absente | absente | absente | absente |

On s'aperçoit que les performances sont comparables quel que soient ces concentrations, ces concentrations étant inférieures de préférence à 0,05 % en poids pour le 1^{er} agent et inférieures ou égales à 0,5 % en poids pour le 2^{ème} agent. Il est donc possible par la combinaison de ces deux agents d'obtenir un béton autoplaçant sans filler à performances égales à un béton autoplaçant renfermant un filler.

### Exemples comparatifs 8, 9 et 10

Le tableau 3 présente d'autres exemples comparatifs dans lesquels ont été testés des compositions renfermant des molécules différentes en modifiant l'un des deux agents, soit l'agent augmentant le seuil de cisaillement soit l'agent augmentant la viscosité.

**Tableau 3**

| | Ex 3 (Réf.) | Ex 8 (comp) | Ex 9 (comp) | Ex 10 (comp) |
|---|---|---|---|---|
| Ciment CEM II 32,5 R | 300 | 376 | 376 | 376 |
| Eau efficace | 180 | 227 | 227 | 227 |
| Filler | 192 | 0 | 0 | 0 |
| Granulats | 1654 | 1654 | 1654 | 1654 |
| Superplastifiant | 2,0 % | 1,0 % | 1,0 % | 1,0 % |
| Agent de cohésion | 0,05 % | | | |
| 1^{er} agent (seuil) | | | | |
| ESACOL HS30 | | 0,05 % | | |
| ESACOL MX 144 | | | 0,02 % | |
| ESACOL HS 26 | | | | 0,02 % |
| 2^{ème} agent (viscosant) | | | | |
| NATROSOL 250 GXR | | 0,05 % | | 0,045 % |
| NATROSOL 250 HHXR | | | 0,06 % | |
| Eau efficace / Ciment | 0,6 | 0,6 | 0,6 | 0,6 |
| Volume de pâte | 370 L | 370 L | 370 L | 370 L |
| Etalement à t₀ | 720 mm | 610 mm | 560 mm | 680 mm |
| Temps à la goulotte | 4,5 s | 2,8 s | 12,5 s | 2,3 s |
| Stabilité au tamis | 27 % | 35% | 21 % | 38 % |
| Ressuage | absent | absent | absent | présent |
| Ségrégation dynamique | absente | présente | absente | présente |

Lorsqu'un seul des agents selon l'invention est présent, les performances ne sont pas réunies en ce qui concerne notamment la ségrégation dynamique présente dans les exemples comparatifs 8 et 10 ou en ce qui concerne le temps à la goulotte dans l'exemple comparatif 9.

### Exemple 11 (référence avec filler) et exemple 12

Un ciment Portland différent principalement par rapport à sa classe de résistance, à savoir un ciment CEM II 45,5 R a été testé. Les résultats sont présentés dans le tableau 4.

**Tableau 4**

| | Ex 11 (Référence) | Ex 12 |
|---|---|---|
| Ciment CEM II 45,5 R | 340 | 391 |
| Eau efficace | 187 | 215 |
| Filler | 120 | 0 |
| Granulats | 1665 | 1665 |
| Superplastifiant | 3,30% | 2,750 % |
| 1^{er} agent (seuil) | | |
| ESACOL MX 144 | | 0,056 % |
| 2^{ème} agent (viscosant) | | |
| NATROSOL 250 GXR | | 0,095 % |
| Eau efficace / Ciment | 0,55 | 0,55 |
| Volume de pâte | 374 L | 374 L |
| Etalement à t₀ | 665 mm | 680 mm |
| Temps à la goulotte | 2,30 s | 2,67 s |
| Stabilité au tamis | 12% | 17% |
| Ressuage | absent | absent |
| Ségrégation dynamique | absente | absente |

Le mélange des deux agents selon l'invention est également efficace pour un tel ciment. Les performances obtenues sont équivalentes à un béton renfermant un filler (exemple de référence 11).

### Exemple 13

Dans le tableau 5, l'exemple 13 présente l'utilisation du poly(oxyde d'éthylène) en tant que deuxième agent, à savoir agent augmentant la viscosité. Il est tout à fait intéressant pour de tels bétons et permet d'obtenir des performances équivalentes à l'exemple de référence 3, à savoir un béton avec filler.

**Tableau 5**

| | Ex 13 | Ex 3 (Référence) |
|---|---|---|
| Ciment CEM II 32,5 R | 376 | 300 |
| Eau efficace | 227 | 180 |
| Filler | 0 | 192 |
| Granulats | 1654 | 1654 |
| Superplastifiant | 1,0 % | 2,0 % |
| Agent de cohésion | | 0,05 % |
| 1^{er} agent (seuil) | | |
| ESACOL MX 144 | 0,02 % | |
| 2^{ème} agent (viscosant) | | |
| Poly(oxyde d'éthylène) | 0,5 % | |
| Eau efficace / ciment | 0,6 | 0,6 |
| Volume de pâte | 370 L | 370 L |
| Etalement à t₀ | 715 mm | 720 mm |
| Temps à la goulotte | 3,7 s | 4,5 s |
| Stabilité au tamis | 22 % | 27 % |
| Ressuage | absent | absent |
| Ségrégation dynamique | absente | absente |

Il est donc clair de l'ensemble de ses résultats, que l'on obtient une synergie par l'utilisation combinée du premier agent augmentant le seuil de cisaillement et du second agent augmentant la viscosité à des teneurs très faibles par rapport au ciment, permettant de s'affranchir totalement de la présence de filler dans un béton autoplaçant.

Dans l'ensemble de ces résultats, les résistances mécaniques à 28 jours étaient de l'ordre de 28 à 30 M.Pa, comme prévu.

## Revendications

1. Composition cimentaire de béton autoplaçant comprenant un ciment, un superplastifiant , un mélange d'adjuvants modificateurs de rhéologie, ledit béton renfermant des granulats de dimension pouvant aller jusqu'à 20 mm, **caractérisée en ce que** ledit mélange comprend la combinaison :
- d'au moins un premier agent augmentant de façon prépondérante le seuil de cisaillement du béton à l'état fluide choisi parmi un éther de polysaccharide naturel, un éther d'hydroxyalkylguar, une hydroxyéthylcellulose ou un hydroxypropylguar, modifiés hydrophobes par introduction de greffons latéraux hydrophobes, et
- au moins un second agent viscosant augmentant de façon prépondérante la viscosité dudit béton à l'état fluide, choisi parmi une hydroxyalkylcellulose, non modifiée hydrophobe, à degré de polymérisation compris entre 500 environ et 4500 environ, présentant une viscosité inférieure à 50 Pa.s en solution aqueuse à 2 % en poids, et un poly(oxyde d'éthylène)
et une teneur en filler dans le béton inférieure à 20 % en poids par rapport au ciment.

2. Composition cimentaire de béton autoplaçant selon la revendication 1, **caractérisée en ce que** les greffons du premier agent sont des chaînes alkyles en C₄ - C₃₀.

3. Composition cimentaire de béton autoplaçant selon l'une des revendications 1 ou 2, **caractérisée en ce que** le poly(oxyde d'éthylène) est de poids moléculaire compris entre 1.000.000 et 5.000.000.

4. Composition cimentaire de béton autoplaçant selon la revendication 3, **caractérisée en ce que** le poly(oxyde d'éthylène) est de poids moléculaire compris entre 2.500.000 et 4.000.000.

5. Composition selon l'une quelconque des revendications précédentes, **caractérisée en ce qu'**elle renferme jusqu'à 1 %, de préférence jusqu'à 0,1 % en poids de ciment du premier agent et jusqu'à 5 %, de préférence jusqu'à 2 % en poids de ciment du second agent.

6. Béton autoplaçant, **caractérisé en ce qu'**il renferme une composition cimentaire selon l'une quelconque des revendications 1 à 5.

7. Béton autoplaçant selon la revendication 6, **caractérisé en ce qu'**il renferme une teneur en filler inférieure à 10 % en poids, de préférence inférieure à 5 % en poids du ciment.

8. Utilisation d'un mélange comprenant :
- d'au moins un premier agent augmentant de façon prépondérante le seuil de cisaillement du béton à l'état fluide choisi parmi un éther de polysaccharide naturel, un éther d'hydroxyalkylguar, une hydroxyéthylcellulose ou un hydroxypropylguar, modifiés hydrophobes par introduction de greffons latéraux hydrophobes, et
- au moins un second agent viscosant augmentant de façon prépondérante la viscosité dudit béton à l'état fluide, choisi parmi une hydroxyalkylcellulose, non modifiée hydrophobe, à degré de polymérisation compris entre 500 environ et 4500 environ présentant une viscosité inférieure à 50 Pa.s en solution aqueuse à 2 % en poids, et un poly(oxyde d'éthylène)
pour s'affranchir de la présence de particules de filler, dans un béton autoplaçant selon la revendication 6, sans réduction des performances relatives à l'étalement, au ressuage, et à la ségrégation dynamique des granulats.

## Patentansprüche

1. Zementzusammensetzung selbstausrichtenden Betons, umfassend einen Zement, einen Superverflüssiger und ein Gemisch von die Rheologie verändernden Additiven, wobei der Beton Granulate in einer Größe umfasst, die bis zu 20 mm betragen kann, **dadurch gekennzeichnet, dass** das Gemisch die Kombination umfasst:
- mindestens eines ersten Mittels, welches die Scherschwelle des Betons in flüssigem Zustand maßgeblich erhöht, ausgewählt aus einem natürlichen Polysaccharidether, einem Hydroxyalkylguarether, einer Hydroxyethylcellulose oder einem Hydroxypropylguar, hydrophob modifiziert durch Einführen von hydrophoben seitlichen Pfropfen, und
- mindestens eines zweiten viskosierenden Mittels, welches die Viskosität des Betons in flüssigem Zustand maßgeblich erhöht, ausgewählt aus einer Hydroxyalkylcellulose, nicht hydrophob modifiziert, mit Polymerisationsgrad zwischen zirka 500 und zirka 4500 inklusive, aufweisend eine Viskosität unter 50 Pa.s in wässriger Lösung bei 2 Gew.-%, und einem Poly(ethylenoxid),
und einen Fillergehalt in dem Beton unter 20 Gew.-% in Bezug zum Zement.

2. Zementzusammensetzung selbstausrichtenden Betons nach Anspruch 1, **dadurch gekennzeichnet, dass** die Pfropfe des ersten Mittels C₄-C₃₀-Alkylketten sind.

3. Zementzusammensetzung selbstausrichtenden Betons nach einem der Ansprüche 1 oder 2, **dadurch gekennzeichnet, dass** das Poly(ethylenoxid) ein Molekulargewicht zwischen 1.000.000 und 5.000.000 inklusive hat.

4. Zementzusammensetzung selbstausrichtenden Betons nach Anspruch 3, **dadurch gekennzeichnet, dass** das Poly(ethylenoxid) ein Molekulargewicht zwischen 2.500.000 und 4.000.000 inklusive hat.

5. Zusammensetzung nach einem der vorangehenden Ansprüche, **dadurch gekennzeichnet, dass** sie bis 1 Gew.-%, vorzugsweise bis 0,1 Gew.-% Zement des ersten Mittels und bis 5 Gew.-%, vorzugsweise bis 2 Gew.-% Zement des zweiten Mittels umfasst.

6. Selbstausrichtender Beton, **dadurch gekennzeichnet, dass** er eine Zementzusammensetzung nach einem der Ansprüche 1 bis 5 umfasst.

7. Selbstausrichtender Beton nach Anspruch 6, **dadurch gekennzeichnet, dass** er einen Fillergehalt unter 10 Gew.-%, vorzugsweise unter 5 Gew.-% des Zements umfasst.

8. Verwendung eines Gemischs, umfassend:
- mindestens ein erstes Mittel, welches die Scherschwelle des Betons in flüssigem Zustand maßgeblich erhöht, ausgewählt aus einem natürlichen Polysaccharidether, einem Hydroxyalkylguarether, einer Hydroxyethylcellulose oder einem Hydroxypropylguar, hydrophob modifiziert durch Einführen von hydrophoben seitlichen Pfropfen, und
- mindestens ein zweites viskosierendes Mittel, welches die Viskosität des Betons in flüssigem Zustand maßgeblich erhöht, ausgewählt aus einer Hydroxyalkylcellulose, nicht hydrophob modifiziert, mit Polymerisationsgrad zwischen zirka 500 und zirka 4500 inklusive, aufweisend eine Viskosität unter 50 Pa.s in wässriger Lösung bei 2 Gew.-%, und ein Poly(ethylenoxid),
zur Vermeidung der Anwesenheit von Filler in einem selbstausrichtenden Beton nach Anspruch 6 ohne Verringerung der Leistungen in Bezug auf Verteilung, Bluten und dynamische Segregation der Granulate.

## Claims

1. Cement composition of self-compacting concrete comprising a cement, a superplasticizer, a mixture of rheology-modifying admixtures, said concrete containing aggregates of size possibly reaching 20 mm, **characterized in that** said mixture comprises the combination of:
- at least one first agent predominantly increasing the shear threshold of the concrete in the fluid state, selected from among a natural polysaccharide ether, hydroxyalkylguar ether, hydroxyethylcellulose or hydroxypropylguar, hydrophobically modified by adding hydrophobic side grafts, and
- at least one second viscosifying agent predominantly increasing the viscosity of said concrete in the fluid state, selected from among a non-hydrophobically modified hydroxyalkylcellulose with degree of polymerisation of between about 500 and about 4500, having viscosity lower than 50 Pa.s. in a 2 weight % aqueous solution, and a poly(ethylene oxide),
and has a filler content in the concrete lower than 20 % by weight relative to the cement.

2. The cement composition of self-compacting concrete according to claim 1, **characterized in that** the grafts of the first agent are C₄ - C₃₀ alkyl chains.

3. The cement composition of self-compacting concrete according to one of claims 1 or 2, **characterized in that** the poly(ethylene oxide) has a molecular weight of between 1,000,000 and 5,000,000.

4. The cement composition of self-compacting concrete according to claim 3, **characterized in that** the poly(ethylene oxide) has a molecular weight of between 2,500,000 and 4,000,000.

5. The composition according to any of the preceding claims, **characterized in that** it contains up to 1 weight %, preferably up to 0.1 weight % of first agent in cement weight percent, and up to 5 weight % preferably up to 2 weight % of second agent in cement weight percent.

6. Self-compacting concrete, **characterized in that** it contains a cement composition according to any of claims 1 to 5.

7. Self-compacting concrete according to claim 6, **characterized in that** it has a filler content lower than 10 weight %, preferably lower than 5 weight % in cement weight percent.

8. Use of the mixture comprising:
- at least one first agent predominantly increasing the shear threshold of the concrete in the fluid state, selected from among a natural polysaccharide ether, hydroxyalkylguar ether, hydroxyethylcellulose or hydroxypropylguar, hydrophobically modified by adding hydrophobic side grafts, and
- at least one second viscosifying agent predominantly increasing the viscosity of said concrete in the fluid state, selected from among a non-hydrophobically modified hydroxyalkylcellulose with degree of polymerisation of between about 500 and about 4500, having viscosity lower than 50 Pa.s. in a 2 weight % aqueous solution, and a poly(ethylene oxide),
to overcome the presence of filler particles in a self-compacting concrete according to claim 6, without a reduction in performance in respect of slump, bleeding and dynamic segregation of aggregates.
